# EUROPÄISCHE PATENTANMELDUNG

(11) **EP 2 657 684 A1**
(43) Veröffentlichungstag der Anmeldung: **30.10.2013**
(21) Anmeldenummer: 13002159.5
(22) Anmeldetag: 24.04.2013
(51) Int. Cl.: G01N 21/17

(54) **Optoakustische Messvorrichtung und Messverfahren**

(30) Priorität: 25.04.2012 DE 102012008102
(71) Anmelder: Testo AG, 79853 Lenzkirch (DE)
(72) Erfinder: Bauer, Christoph, 38678 Clausthal-Zellerfeld (DE)
(74) Vertreter: Börjes-Pestalozza, Heinrich

(57) **Zusammenfassung**

Es wird eine Messvorrichtung (1) zur Untersuchung von wenigstens einem Bestandteil in einer festen, flüssigen oder gasförmigen Probe mit einer Messkammer (2) zur Aufnahme der Probe, einer Lichtquelle (3), die zur Erzeugung einer mit der Probe in der Messkammer (2) wechselwirkenden elektromagnetischen Welle (4) mit einer Trägerfrequenz und einer Modulationsfrequenz eingerichtet ist, wobei die Trägerfrequenz auf den wenigstens einen Bestandteil abgestimmt ist, und mit einem akustischen Abnehmer (6), der auf die Modulationsfrequenz abgestimmt ist, vorgeschlagen, wobei der akustische Abnehmer (6) außerhalb der Messkammer (2) angeordnet ist und in oder an einer Wand (8) der Messkammer (2) eine akustische Auskopplung (9) eingerichtet ist, mit welcher der akustische Abnehmer (6) akustisch an die in der Messkammer (2) befindliche Probe angekoppelt oder ankoppelbar ist.

## Beschreibung

Die Erfindung betrifft eine Messvorrichtung zur Untersuchung von wenigstens einem Bestandteil in einer festen, flüssigen oder gasförmigen Probe, mit einer Messkammer zur Aufnahme der Probe, einer Lichtquelle, die zur Erzeugung einer mit der Probe in der Messkammer wechselwirkenden elektromagnetischen Welle mit einer Trägerfrequenz und einer Modulationsfrequenz eingerichtet ist, wobei die Trägerfrequenz auf den wenigstens einen Bestandteil abgestimmt ist, und mit einem akustischen Abnehmer, der auf die Modulationsfrequenz abgestimmt ist.

Die Erfindung betrifft weiter ein Messverfahren zur Untersuchung von wenigstens einem Bestandteil in einer festen, flüssigen oder gasförmigen Probe, wobei die Probe in eine Messkammer verbracht wird, mit einer Lichtquelle eine elektromagnetische Welle mit einer Trägerfrequenz und einer Modulationsfrequenz erzeugt und auf die Probe in der Messkammer eingestrahlt wird, wobei die Trägerfrequenz auf den wenigstens einen Bestandteil abgestimmt ist, und mit einem akustischen Abnehmer, der auf die Modulationsfrequenz abgestimmt ist, eine Wechselwirkung der elektromagnetischen Welle mit dem wenigstens einen Bestandteil der Probe detektiert wird.

Aus der US 7245380 B2 sind eine Messvorrichtung und ein Messverfahren bekannt, bei welchen eine Stimmgabel im Innenraum einer Messzelle angeordnet ist und im Unterschied zur konventionellen photoakustischen Spektroskopie statt einer Anhäufung der absorbierten Energie in der Messkammer eine Anhäufung der absorbierten Energie in einer Stimmgabel durchgeführt wird.

Der Erfindung liegt die Aufgabe zu Grunde, eine Messvorrichtung zu schaffen, welche robuste Gebrauchseigenschaften für einen häufigen Einsatz aufweist.

Zur Lösung dieser Aufgabe ist erfindungsgemäß bei einer Messvorrichtung der eingangs beschriebenen Art vorgesehen, dass der akustische Abnehmer außerhalb der Messkammer angeordnet ist und dass an oder in einer Wand der Messkammer eine akustische Auskopplung eingerichtet ist, mit welcher der akustische Abnehmer akustisch an die in der Messkammer befindliche Probe angekoppelt oder ankoppelbar ist. Es ist somit eine Übertagung von akustischen Anregungen, beispielsweise Schallwellen, von der Probe an den akustischen Abnehmer durch die akustische Auskopplung ermöglicht. Von Vorteil ist dabei, dass ein direkter Kontakt zwischen dem akustischen Abnehmer und der Probe vermeidbar ist. Der akustische Abnehmer kann somit nicht so leicht verschmutzen. Die erfindungsgemäß ausgebildete Messvorrichtung bleibt daher für eine größere Anzahl von Messvorgängen einsatzbereit, ohne dass eine aufwendige Wartung oder ein Austausch einzelner Teile erforderlich ist. Von Vorteil ist weiter, dass eine Beschädigung, Abnutzung und/oder Alterung von empfindlichen Teilen des akustischen Abnehmers durch die Probe vermeidbar oder zumindest reduzierbar ist. Somit sind die Gebrauchseigenschaften der erfindungsgemäßen Messvorrichtung derart robust ausbildbar, dass die Messvorrichtung für einen Dauereinsatz geeignet einrichtbar ist. Besonders günstig ist es, wenn die Probe gasförmig oder flüssig ist.

Die elektromagnetische Welle kann mit der Modulationsfrequenz moduliert sein, beispielsweise durch Amplitudenmodulation, insbesondere durch Pulsen, oder durch Frequenzmodulation. Bevorzugt erstreckt sich die Modulation über wenigstens eine Wellenlänge der Trägerfrequenz.

Bei einer Ausgestaltung der Erfindung kann vorgesehen sein, dass der akustische Abnehmer einen Resonator aufweist, welcher an die akustische Auskopplung angeschlossen ist. Von Vorteil ist dabei, dass auf diese Weise eine akustische Anregung, die über die akustische Auskopplung übertragen wird, verstärkt werden kann. Somit kann die Empfindlichkeit des akustischen Abnehmers nochmals gesteigert werden. Bevorzugt ist der Resonator als Hohlraumresonator ausgebildet. Besonders günstig ist es, wenn der Resonator als Mikroresonator ausgebildet ist.

Bei einer Ausgestaltung der Erfindung kann vorgesehen sein, dass die akustische Auskopplung als akustisches Fenster ausgebildet ist. Ein akustisches Fenster ist für akustische Anregungen ganz oder teilweise durchlässig. Hierbei kann das Fenster für die Probe ganz oder teilweise undurchlässig ausgebildet sein. Von Vorteil ist dabei, dass eine akustische Auskopplung ausbildbar ist, mit welcher ein Eindringen oder Diffundieren der Probe in den akustischen Abnehmer ganz oder zumindest teilweise vermeidbar ist.

Hierbei kann vorgesehen sein, dass die akustische Auskopplung ein akustisches Trennelement aufweist, welches für eine mit dem akustischen Abnehmer zu detektierende oder detektierbare akustische Anregung durchlässig ist. Bevorzugt ist hierbei vorgesehen, dass das akustische Trennelement gas- und/oder flüssigkeitsdicht ausgebildet ist. Beispielsweise kann das akustische Trennelement als eine Membran oder ein vorzugsweise engmaschiges Sieb ausgebildet sein. Von Vorteil ist dabei, dass eine Übertragung der akustischen Anregung, welche mit der eingestrahlten elektromagnetischen Welle in der Messkammer erzeugbar ist, mit ausreichender Detektionsempfindlichkeit an den akustischen Abnehmer übertragbar ist. Eine Diffusion der Probe in den akustischen Abnehmer ist mit dem Trennelement verhinderbar, wenn die Maschen des Siebs eng genug dimensioniert sind.

Bei einer Ausgestaltung der Erfindung kann vorgesehen sein, dass der akustische Abnehmer ein auf akustische Anregungen ansprechendes Resonanzelement aufweist, welches auf die Modulationsfrequenz abgestimmt ist. Beispielsweise kann das Resonanzelement als Stimmgabel ausgebildet sein. Besonders günstig ist es, wenn das Resonanzelement als Mikrostimmgabel ausgebildet ist. Von Vorteil ist dabei, dass eine akustische Anregung, welche durch eine Wechselwirkung an den Bestandteilen in der Probe aufgrund der eingestrahlten optischen Anregung, nämlich der elektromagnetischen Welle, hervorgerufen wird, mit sehr guter Messempfindlichkeit in dem akustischen Abnehmer detektierbar ist. Bevorzugt ist das Resonanzelement in dem Resonator angeordnet.

Bei einer Ausgestaltung der Erfindung kann vorgesehen sein, dass die Lichtquelle oder optische Quelle außerhalb der Messkammer angeordnet und über eine in oder an der oder einer weiteren Wand der Messkammer ausgebildete optische Einkopplung an die in der Messkammer befindliche Probe angekoppelt oder ankoppelbar ist. Von Vorteil ist dabei, dass ein direkter Kontakt von empfindlichen Teilen der Lichtquelle mit der Probe vermeidbar ist. Somit kann eine Verschmutzung oder Abnutzung der Lichtquelle durch die Probe vermieden werden, wodurch die Standfestigkeit der Messvorrichtung nochmals erhöhbar ist.

Bei einer Ausgestaltung der Erfindung kann vorgesehen sein, dass die optische Einkopplung als optisches Fenster ausgebildet ist. Somit ist auf einfacher Weise erreichbar, dass die optische Einkopplung für die erzeugten oder erzeugbaren elektromagnetischen Wellen durchlässig ausgebildet ist.

Hierbei kann vorgesehen sein, dass die optische Einkopplung ein optisches Trennelement aufweist, welches für die mit der Lichtquelle erzeugten elektromagnetischen Wellen durchlässig ausgebildet ist. Bevorzugt ist das optische Trennelement gas-und/oder flüssigkeitsdicht ausgebildet, um ein Diffundieren oder Eindringen der Probe in die Lichtquelle zu verhindern. Beispielsweise kann das optische Trennelement als eine Scheibe oder eine Membran ausgebildet sein, die jeweils für elektromagnetische Wellen der Trägerfrequenz transparent oder durchlässig ausgebildet sind.

Bei einer Ausgestaltung der Erfindung kann vorgesehen sein, dass die Messkammer zur kontinuierlichen Durchströmung mit der flüssigen oder gasförmigen Probe eingerichtet ist. Von Vorteil ist dabei, dass Dauermessungen auf einfache Weise ausführbar sind.

Als Lichtquelle ist beispielsweise ein Laser oder eine LED verwendbar. Besonders günstig ist es, eine kostengünstige und robuste LED zur Erzeugung der elektromagnetischen Welle auszubilden und zu verwenden.

Bei einer Ausgestaltung der Erfindung kann vorgesehen sein, dass der akustische Abnehmer beheizbar ausgebildet ist. Bevorzugt ist das Resonanzelement des akustischen Abnehmers beheizbar ausgebildet. Von Vorteil ist dabei, dass definierte Messeigenschaften des akustischen Abnehmers erreichbar sind. Von Vorteil ist weiter, dass eine Korrosion oder dergleichen Materialveränderung an dem akustischen Abnehmer und/oder Ablagerungen an dem akustischen Abnehmer verhinderbar sind. Somit ist eine Resonanzfrequenz des Resonanzelements zeitlich konstant einrichtbar. Durch die erfindungsgemäße Anordnung des akustischen Abnehmers außerhalb der Messkammer kann außerdem erreicht werden, dass durch die Beheizung des akustischen Abnehmers keine Beeinträchtigung oder Veränderung der Probe erfolgt.

Zur Lösung der genannten Aufgabe ist erfindungsgemäß bei einem Messverfahren der eingangs beschriebenen Art vorgesehen, dass eine durch die Wechselwirkung der elektromagnetischen Welle mit dem Bestandteil erzeugte akustische Anregung über eine in oder an einer Wand der Messkammer ausgebildete akustische Auskopplung ausgekoppelt wird und dass die ausgekoppelte akustische Anregung außerhalb der Messkammer mit dem akustischen Abnehmer detektiert wird. Von Vorteil ist dabei, dass eine Trennung oder Barriere zwischen dem empfindlichen akustischen Abnehmer und der unter Umständen aggressiven Probe in der Messkammer einrichtbar ist. Somit kann die Standfestigkeit, also der Zeitabstand zwischen notwendigen Wartungen, einer bei der Ausführung des erfindungsgemäßen Messverfahrens eingesetzten Messvorrichtung erhöht werden.

Bei einer Ausgestaltung der Erfindung kann vorgesehen sein, dass die ausgekoppelte akustische Anregung außerhalb der Messkammer in einem an die akustische Auskopplung angeschlossenen Resonator verstärkt wird. Von Vorteil ist dabei, dass die Detektionsempfindlichkeit des akustischen Abnehmers steigerbar ist. Somit können insbesondere Signalverluste, die sich an der akustischen Auskopplung ergeben, kompensiert werden. Das Signal-zu-Rauschen-Verhältnis ist somit verbessbar.

Bei einer Ausgestaltung der Erfindung kann vorgesehen sein, dass mit der ausgekoppelten akustischen Anregung eine Resonanz eines Resonanzelements in dem akustischen Abnehmer angeregt wird. Von Vorteil ist dabei, dass die Detektion spezifisch auf die Modulationsfrequenz ausrichtbar ist. Somit kann der akustische Abnehmer selektiv auf durch die elektromagnetische Welle an dem Bestandteil erzeugte akustische Anregungen eingesetzt werden. Störeinflüsse von anderen Quellen sind somit ausblendbar, da diese häufig bei anderen Frequenzen liegen.

Bei einer Ausgestaltung der Erfindung kann vorgesehen sein, dass die elektromagnetische Welle außerhalb der Messkammer erzeugt wird. Von Vorteil ist dabei, dass die Messkammer sehr klein und robust ausbildbar ist, da eine Lichtquelle zur Erzeugung der elektromagnetischen Welle keinen zusätzlichen Bauraum in der Messkammer beansprucht. Von Vorteil ist weiter, dass die Erzeugung der elektromagnetischen Welle, beispielsweise mit einem Laser, ungestört durch die Probe ausführbar ist.

Bei einer Ausgestaltung der Erfindung kann vorgesehen sein, dass die erzeugte elektromagnetische Welle über eine in oder an der oder einer weiteren Wand der Messkammer ausgebildete optische Einkopplung an die in der Messkammer befindliche Probe angekoppelt wird. Von Vorteil ist dabei, dass eine Barriere zwischen der Probe und einer empfindlichen Lichtquelle, beispielsweise einer LED oder einem Laser, einrichtbar ist. Somit ist ein Verschmutzen oder ein Abnutzen der Lichtquelle und von deren Optiken durch Kontakt mit der Probe vermeidbar.

Bei einer Ausgestaltung der Erfindung kann vorgesehen sein, dass die Probe in einem kontinuierlichen Fluss durch die Messkammer strömt. Von Vorteil ist dabei, dass Dauermessungen oder häufig wiederholte Einzelmessungen einfach durchführbar sind. Dies ist besonders günstig bei flüssigen oder gasförmigen Proben.

Bei einer Ausgestaltung der Erfindung kann vorgesehen sein, dass der akustische Abnehmer beheizt wird. Von Vorteil ist dabei, dass Alterungsprozesse bei dem akustischen Abnehmer verzögerbar sind. Besonders günstig ist es, wenn das Resonanzelement des akustischen Abnehmers beheizt wird. Von Vorteil ist dabei, dass eine temperaturbedingte Änderung von Resonanzfrequenzen des Resonanzelements verhinderbar ist, indem das Resonanzelement durch die Beheizung auf einer konstanten Betriebstemperatur gehalten wird.

Besonders günstige Gebrauchseigenschaften ergeben sich, wenn das erfindungsgemäße Messverfahren bei einer erfindungsgemäßen Messvorrichtung verwendet wird. Von Vorteil ist dabei, dass die Bestandteile der erfindungsgemäßen Messvorrichtung eine einfache Umsetzung der Merkmale des erfindungsgemäßen Messverfahrens erlauben.

Die Erfindung wird nun anhand eines Ausführungsbeispiels näher beschrieben, ist aber nicht auf dieses Ausführungsbeispiel beschränkt. Weitere Ausführungsbeispiele ergeben sich durch Kombination einzelner oder mehrerer Merkmale der Schutzansprüche untereinander und/oder mit einzelnen oder mehreren Merkmalen des Ausführungsbeispiels.

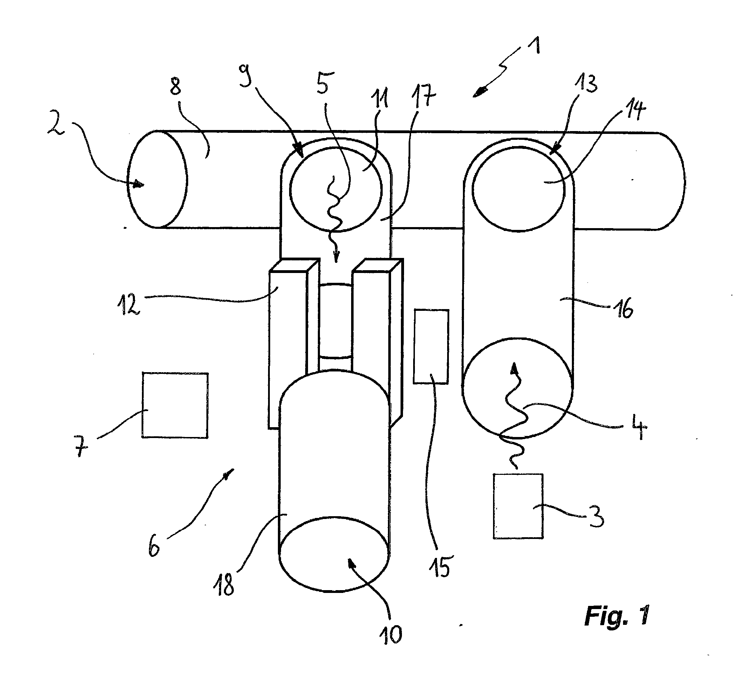

Es zeigt die einzige
- Fig. 1:: eine stark vereinfachte Prinzipdarstellung einer erfindungsgemäßen Messvorrichtung zur Erläuterung des erfindungsgemäßen Messverfahrens.

Eine im Ganzen mit 1 bezeichnete Messvorrichtung hat eine Messkammer 2. Die Messkammer 2 ist zur Aufnahme einer festen, flüssigen oder gasförmigen Probe eingerichtet. Bevorzugt ist eine Aufnahme von flüssigen oder gasförmigen Proben vorgesehen.

Die Messvorrichtung 1 hat weiter eine Lichtquelle 3, mit welchem eine elektromagnetische Welle 4 erzeugbar ist.

Die elektromagnetische Welle 4 wird hierbei so erzeugt, dass sie eine konstante Trägerfrequenz und eine ebenfalls konstante Modulationsfrequenz aufweist. Hierbei kann die elektromagnetische Welle 4 mit der Modulationsfrequenz amplitudenmoduliert sein.

Beispielsweise kann es sich bei der elektromagnetischen Welle um Licht in einem sichtbaren Spektralbereich oder nahe des sichtbaren Spektralbereichs handeln. Beispielsweise kann die Lichtquelle 3 als LED ausgebildet sein.

Die elektromagnetische Welle 4 kann hierbei Licht einer Wellenlänge, die der Trägerfrequenz entspricht, sein, wobei das Licht mit der Modulationsfrequenz gepulst ist.

Die Lichtquelle 3 ist so ausgebildet und angeordnet, dass die erzeugte elektromagnetische Welle 4 in die Messkammer 2 eingestrahlt wird.

In der Messkammer 2 findet eine Wechselwirkung der elektromagnetischen Welle 4 mit der festen, flüssigen oder gasförmigen Probe statt. Hierbei ist die Trägerfrequenz der elektromagnetischen Welle 4 auf einen zu untersuchenden Bestandteil in der Probe abgestimmt, indem die Trägerfrequenz gleich einer Absorptionsfrequenz des Bestandteils gewählt ist.

Durch die bereits erwähnte Modulation mit der Modulationsfrequenz wird somit an dem Bestandteil eine akustische Anregung 5 - typischerweise eine Schallwelle - erzeugt, die mit einem akustischen Abnehmer 6 detektiert wird.

Die Frequenz der akustischen Anregung 5 ist gleich der Modulationsfrequenz oder einem ganzzahligen Vielfachen oder einem ganzzahligen Bruchteil der Modulationsfrequenz der elektromagnetischen Welle 4.

Der akustische Abnehmer 6 ist auf die Modulationsfrequenz abgestimmt, um die akustische Anregung 5 zu detektieren.

Die Messvorrichtung 1 ist somit zur Untersuchung von wenigstens einem Bestandteil der in der Messkammer 2 befindlichen flüssigen oder gasförmigen Probe eingerichtet. Ein Ausgangssignal des akustischen Abnehmers 6 wird hierbei in einer nicht weiter dargestellten Auswerteeinheit 7, die in an sich bekannter Weise ausgestaltet ist, ausgewertet. Die Auswerteeinheit 7 kann beispielsweise über Lock-In-Verstärker eingerichtet sein.

Die Messkammer 2 weist eine Wand 8 auf, in oder an welcher eine akustische Auskopplung 9 ausgebildet ist.

Der akustische Abnehmer 6 ist außerhalb der Messkammer 2 angeordnet und an die akustische Auskopplung 9 derart angeschlossen, dass die durch die Wechselwirkung der eingestrahlten elektromagnetischen Welle 4 mit dem Bestandteil der Probe erzeugte akustische Anregung 5 über die akustische Auskopplung 9 aus der Messkammer 2 ausgekoppelt und an den akustischen Abnehmer 6 übertragen wird.

Der akustische Abnehmer 6 weist einen Resonator 10 in Form eines Hohlraumresonators auf, durch welchen die ausgekoppelte akustische Anregung 5 verstärkt wird. Der Resonator 10 ist ein Mikroresonator. Der Resonator 10 und die akustische Auskopplung 9 bilden somit einen miniaturisierten Akustikkanal des akustischen Abnehmers 6.

Der Resonator 10 ist durch seine geometrische Abmessung mit einer Resonanzfrequenz eingerichtet, welche auf die Modulationsfrequenz der elektromagnetischen Welle 4 und somit auf die Frequenz der akustischen Anregung 5 abgestimmt ist.

Die akustische Auskopplung 9 ist als akustisches Fenster ausgebildet und für die Probe undurchlässig, für die akustische Anregung 5 jedoch zumindest teilweise durchlässig.

Hierbei weist die akustische Auskopplung 6 ein akustisches Trennelement 11 auf, welches nach Art einer Scheibe in das erwähnte akustische Fenster eingesetzt ist. Im Ausführungsbeispiel ist das akustische Trennelement 11 als Membran ausgebildet, die für die akustischen Anregungen 5 - allgemein für Schallwellen - durchlässig, für Gase oder Flüssigkeiten jedoch undurchlässig ist. Bei weiteren Ausführungsbeispielen ist das Trennelement 11 als Sieb ausgebildet, welches in das erwähnte Fenster eingesetzt ist und eine Diffusion der Probe in den akustischen Abnehmer 6 erschwert oder sogar verhindert. Hierzu ist das akustische Trennelement 11 in diesem Fall als hinreichend engmaschiges Sieb ausgebildet.

Der akustische Abnehmer 6 weist ein Resonanzelement 12 auf, welches auf die akustische Anregung 5 anspricht. Mit dem Resonanzelement 12 - hier nach dem Funktionsprinzip einer Stimmgabel - kann somit die akustische Anregung 5 aufgenommen und in ein elektrisches Ausgangssignal umgewandelt werden. Das Resonanzelement 12 ist in dem Resonator 10 und/oder zwischen zwei Halbschalen 17, 18 des Resonators 10 angeordnet. Das Resonanzelement 12 ist als Mikrostimmgabel ausgebildet.

Der Resonator 10 und das Resonanzelement 12 bilden somit einen miniaturisierten akustischen Abnehmer 6.

Die Auswerteeinheit 7 wertet dieses elektrische Ausgangssignal aus, um Aussagen über das Vorhandensein und/oder über Eigenschaften - beispielsweise eine Konzentration - des Bestandteils in der Probe abzuleiten.

Das Resonanzelement 12 ist auf die bereits erwähnte Modulationsfrequenz abgestimmt, indem eine Resonanzfrequenz des Resonanzelements 12 gleich der Modulationsfrequenz oder einem ganzzahligen Vielfachen oder einem ganzzahligen Bruchteil der Modulationsfrequenz gewählt ist.

Aus Figur 1 ist weiter ersichtlich, dass die Lichtquelle 3 ebenfalls außerhalb der Messkammer 2 angeordnet ist.

In der Wand 8 der Messkammer 2 ist eine optische Einkopplung 13 als optisches Fenster ausgebildet, in welches ein optisches Trennelement 14 nach Art einer Scheibe eingesetzt ist.

Das optische Trennelement 14 ist für die elektromagnetischen Wellen 4 durchlässig und gas- oder flüssigkeitsdicht ausgebildet.

Im Ausführungsbeispiel ist das optische Trennelement 14 als transparente Membran oder transparente Scheibe ausgebildet.

Über die optische Einkopplung 13 ist daher die Lichtquelle 3 an die Probe in der Messkammer 2 ankoppelbar.

Bei dem Betrieb der Messvorrichtung 1, also bei der Ausführung des erfindungsgemäßen Messverfahrens, wird die mit der Lichtquelle 3 erzeugte elektromagnetische Welle 4 daher außerhalb der Messkammer 2 erzeugt und über die optische Einkopplung 13 an die in der Messkammer 2 befindliche Probe angekoppelt.

Diese eingestrahlte elektromagnetische Welle 4 wird - sofern die Trägerfrequenz mit einer Absorptionsfrequenz übereinstimmt - von den zu untersuchenden Bestandteilen in der festen, flüssigen oder gasförmigen Probe in der Messkammer 2 absorbiert. Die Modulation der elektromagnetischen Welle 4 bewirkt eine lokale Druckänderung, die eine akustische Anregung 5 zur Folge hat.

Diese akustische Anregung 5 wird - wie bereits beschrieben - ausgekoppelt und mit dem Resonanzelement 12 des akustischen Abnehmers 6 detektiert.

Die Messkammer 2 ist als Teil einer Rohrleitung ausgebildet, in welcher die zu untersuchende Probe in einem kontinuierlichen Fluss strömt.

Die Messvorrichtung 1 weist schließlich eine nur schematisch dargestellte Heizeinrichtung 15 auf, mit welcher das Resonanzelement 12 und somit der akustische Abnehmer 6 beheizbar sind. Die Heizeinrichtung 15 ist hierbei so angesteuert, dass das Resonanzelement 12 und/oder der Innenraum des Resonators 10 auf einer konstanten Betriebstemperatur gehalten wird, welche über der Umgebungstemperatur oder sogar oberhalb von einer Verdampfungstemperatur, beispielsweise von Wasser, liegen kann.

Die optische Einkopplung 13 ist Teil eines Optikkanals 16, in welchem die elektromagnetische Welle 4 der Probe zugeführt werden kann und wird.

Die Probe kann hierbei in der Messkammer 2 die von der elektromagnetischen Welle 4 transportierte Energie aufnehmen, wenn die Trägerfrequenz der elektromagnetischen Welle 4 entsprechend auf Bestandteile der Probe eingestellt ist. Durch die zusätzlich vorgesehene Modulation der elektromagnetischen Welle 4 mit einer Modulationsfrequenz ergibt sich eine periodische Anregung der Probe oder zumindest der beteiligten Bestandteile der Probe, die zu einer Druckänderung führt.

Diese Druckänderung wird als akustische Anregung 5 über den einen Akustikkanal bildenden akustischen Abnehmer 6 ausgekoppelt, wodurch das Resonanzelement 12 zu Schwingungen angeregt wird. Als Messergebnis kann beispielsweise die Amplitude eines Ausgangssignals des Resonanzelements 12 gemessen werden. Dies kann im Bedarfsfall zusätzlich zeitaufgelöst über ein Messintervall erfolgen.

Bei den erwähnten Bestandteilen der Probe kann es sich um partikuläre Bestandteile handeln. Dies können beispielsweise biologische und/oder organische Bestandteile der Probe, beispielsweise Bakterien und/oder Sporen, oder sonstige partikuläre Bestandteile, beispielsweise Staub- und/oder Rußpartikel, oder dergleichen ausgedehnte Objekte sein. Die Verwendung partikulärer Bestandteile hat den Vorteil, dass die optische Anregung aus der eingestrahlten elektromagnetischen Welle 4 sehr effizient in eine detektierbare akustische Anregung 5 umgesetzt wird, indem die partikularen Bestandteile zu Schwingungen angeregt werden.

Bei der Messvorrichtung 1 mit einer Messkammer 2, in welcher auf eine Probe mit einer elektromagnetischen Welle 4, die eine Trägerfrequenz aufweist und mit einer Modulationsfrequenz moduliert ist, eingewirkt wird, wird vorgeschlagen, einen akustischen Abnehmer 6, der auf die Modulationsfrequenz abgestimmt ist, außerhalb der Messkammer 2 anzuordnen und über eine akustische Auskopplung 7 zur Detektion von in der Probe durch die einwirkende elektromagnetische Welle 4 generierten akustischen Anregungen 5 an die Messkammer 2 anzuschließen.

## Patentansprüche

1. Messvorrichtung (1)zur Untersuchung von wenigstens einem Bestandteil in einer festen, flüssigen oder gasförmigen Probe, mit einer Messkammer (2) zur Aufnahme der Probe, einer Lichtquelle (3), die zur Erzeugung einer mit der Probe in der Messkammer (2) wechselwirkenden elektromagnetischen Welle (4) mit einer Trägerfrequenz und einer Modulationsfrequenz eingerichtet ist, wobei die Trägerfrequenz auf den wenigstens einen Bestandteil abgestimmt ist, und mit einem akustischen Abnehmer (6), der auf die Modulationsfrequenz abgestimmt ist, **dadurch gekennzeichnet, dass** der akustische Abnehmer (6) außerhalb der Messkammer (2) angeordnet ist und dass in oder an einer Wand (8) der Messkammer (2) eine akustische Auskopplung (9) eingerichtet ist, mit welcher der akustische Abnehmer (6) akustisch an die in der Messkammer (2) befindliche Probe angekoppelt oder ankoppelbar ist.

2. Messvorrichtung (1) nach Anspruch 1, **dadurch gekennzeichnet, dass** der akustische Abnehmer (6) einen Resonator (10) aufweist, welcher an die akustische Auskopplung (9) angeschlossen ist.

3. Messvorrichtung (1) nach Anspruch 1 oder 2, **dadurch gekennzeichnet, dass** die akustische Auskopplung (9) als akustisches Fenster ausgebildet ist und/oder dass die akustische Auskopplung (9) ein vorzugsweise gas-und/oder flüssigkeitsdichtes, akustisches Trennelement (11), insbesondere eine Membran oder ein Sieb, aufweist, welches für eine mit dem akustischen Abnehmer (6) zu detektierende oder detektierbare akustische Anregung (5) durchlässig ist.

4. Messvorrichtung nach einem der Ansprüche 1 bis 3, **dadurch gekennzeichnet, dass** der akustische Abnehmer (6) ein auf akustische Anregungen (5) ansprechendes Resonanzelement (12), insbesondere eine Stimmgabel, aufweist, welches auf die Modulationsfrequenz abgestimmt ist.

5. Messvorrichtung (1) nach einem der Ansprüche 1 bis 4, **dadurch gekennzeichnet, dass** die Lichtquelle (3) außerhalb der Messkammer (2) angeordnet und über eine in oder an der oder einer weiteren Wand (8) der Messkammer (2) ausgebildete optische Einkopplung (13) an die in der Messkammer (2) befindliche Probe angekoppelt oder ankoppelbar ist.

6. Messvorrichtung (1) nach einem der Ansprüche 1 bis 5, **dadurch gekennzeichnet, dass** die optische Einkopplung (13) als optisches Fenster ausgebildet ist und/oder dass die optische Einkopplung (13) ein vorzugsweise gas-und/oder flüssigkeitsdichtes, optisches Trennelement (14), insbesondere eine Scheibe oder eine Membran, aufweist, welches für die mit der Lichtquelle (3) erzeugbaren elektromagnetischen Wellen (4) durchlässig ausgebildet ist.

7. Messvorrichtung (1) nach einem der Ansprüche 1 bis 6, **dadurch gekennzeichnet, dass** die Messkammer (2) zur kontinuierlichen Durchströmung mit der flüssigen oder gasförmigen Probe eingerichtet ist und/oder dass der akustische Abnehmer (6), insbesondere das Resonanzelement (12), beheizbar ausgebildet ist.

8. Messverfahren zur Untersuchung von wenigstens einem Bestandteil in einer festen, flüssigen oder gasförmigen Probe, wobei die Probe in eine Messkammer (2) verbracht wird, mit einer Lichtquelle (3) eine elektromagnetischen Welle (4) mit einer Trägerfrequenz und einer Modulationsfrequenz erzeugt und auf die Probe in der Messkammer (2) eingestrahlt wird, wobei die Trägerfrequenz auf den wenigstens einen Bestandteil abgestimmt ist, und mit einem akustischen Abnehmer (6), der auf die Modulationsfrequenz abgestimmt ist, eine Wechselwirkung der elektromagnetischen Welle (4) mit dem wenigstens einen Bestandteil der Probe detektiert wird, **dadurch gekennzeichnet, dass** eine durch die Wechselwirkung der elektromagnetischen Welle (4) mit dem Bestandteil erzeugte akustische Anregung (5) über eine in oder an einer Wand (8) der Messkammer (2) ausgebildete akustische Auskopplung (9) ausgekoppelt wird und dass die ausgekoppelte akustische Anregung (5) außerhalb der Messkammer (2) mit dem akustischen Abnehmer (6) detektiert wird.

9. Messverfahren nach Anspruch 8, **dadurch gekennzeichnet, dass** die ausgekoppelte akustische Anregung (5) außerhalb der Messkammer (2) in einem an die akustische Auskopplung (9) angeschlossenen Resonator (10) verstärkt wird und/oder dass mit der ausgekoppelten akustischen Anregung (5) eine Resonanz eines Resonanzelements (12) in dem akustischen Abnehmer (6) angeregt wird.

10. Messverfahren nach Anspruch 8 oder 9, **dadurch gekennzeichnet, dass** die elektromagnetische Welle (4) außerhalb der Messkammer (2) erzeugt wird und/oder dass die erzeugte elektromagnetische Welle (4) über eine in oder an der oder einer weiteren Wand (8) der Messkammer (2) ausgebildete optische Einkopplung (13) an die in der Messkammer (2) befindliche Probe angekoppelt wird.

11. Messverfahren nach einem der Ansprüche 8 bis 10, **dadurch gekennzeichnet, dass** die Probe in einem kontinuierlichen Fluss durch die Messkammer (2) strömt und/oder dass der akustische Abnehmer (6), insbesondere das Resonanzelement (12), beheizt wird.

12. Messverfahren nach einem der Ansprüche 8 bis 11, **dadurch gekennzeichnet, dass** eine Messvorrichtung (1) nach einem der Ansprüche 1 bis 7 verwendet wird.
